# EUROPEAN PATENT APPLICATION

(11) **EP 2 728 501 A2**
(43) Date of publication of application: **07.05.2014**
(21) Application number: 13185312.9
(22) Date of filing: 20.09.2013
(51) Int. Cl.: G06F 17/50

(54) **Estimating program, estimating apparatus, and manufacturing method**

(30) Priority: 01.11.2012 JP 2012242245
(71) Applicant: FUJITSU LIMITED, Kawasaki-shi, Kanagawa 211-8588 (JP)
(72) Inventor: Kumagai, Tsutomu, Kanagawa, 243-0018 (JP); Taguchi, Terutoshi, Kanagawa, 243-0018 (JP); Yonezawa, Kazuhiro, Kanagawa, 243-0018 (JP)
(74) Representative: HOFFMANN EITLE

(57) **Abstract**

An estimating apparatus for estimating a degree of ease of parts removal, uses design data concerning an assembly that includes a given part as a constituent element. The degree of ease of parts removal apparatus refers to the design data and calculates the degree of ease of removal in a case of removing the given part from a given direction, based on a ratio of an area of the part when the assembly is seen from the given direction to an area of the part as seen from the given direction, without a visual field being blocked by other parts.

## Description

### FIELD

The embodiments discussed herein are related to assembly order estimation.

### BACKGROUND

Conventionally, there has been technology for estimating the assembly order of a product from computer-aided design (CAD) data. According to such technology, for example, assembly constraint information constraining an adjacency relationship between parts of an assembled model and positional relationships between the parts is used to estimate the assembly order. Further, there is a technology of estimating the assembly order of parts by extracting coupling relationship information indicating coupling relationships between the parts of a product model and judging whether a given part is separable from another part as well as determining its interference with the other part, based on the coupling relationship information (see, for example, Japanese Laid-Open Patent Publication Nos. 2008-46924 and H10-240324).

According to the conventional technologies, however, at the time of judging whether a given part is separable from other parts, determination of whether the part can be removed from the product is performed and therefore, there is an increase in the amount of calculation required for the assembly order estimation.

### SUMMARY

It is an object in one aspect of the embodiments to at least solve the above problems in the conventional technologies.

According to an aspect of an embodiment, an estimating apparatus for estimating a degree of ease of parts removal, uses design data concerning an assembly that includes a given part as a constituent element. The degree of ease of parts removal apparatus refers to the design data and calculates the degree of ease of removal in a case of removing the given part from a given direction, based on a ratio of an area of the part when the assembly is seen from the given direction to an area of the part as seen from the given direction, without a visual field being blocked by other parts.

### BRIEF DESCRIPTION OF DRAWINGS

FIG. 1 is an explanatory diagram of an operation example of an estimating apparatus according to an embodiment;
FIG. 2 is a block diagram of a hardware configuration of the estimating apparatus;
FIG. 3 is a block diagram of a functional configuration example of the estimating apparatus;
FIGs. 4A and 4B are explanatory diagrams of one example of the contents of the design data;
FIGs. 5A, 5B, and 5C are explanatory diagrams (part 1) of an example of selection of a candidate part for removal;
FIGs. 6A and 6B are explanatory diagrams (part 2) of an example of selection of a candidate part for removal;
FIG. 7 is an explanatory diagram of one example of a list of candidate parts for removal;
FIG. 8 is an explanatory diagram of a first criterion in the identification of the part to be removed;
FIG. 9 is an explanatory diagram of a second criterion in the identification of the part to be removed;
FIG. 10 is an explanatory diagram of a third criterion in the identification of a part to be removed;
FIG. 11 is an explanatory diagram of a fourth criterion in the identification of the part to be removed;
FIG. 12 is an explanatory diagram of one example of the identification of the part to be removed;
FIGs. 13A and 13B are explanatory diagrams of an example of estimating a removal order of fastening parts;
FIG. 14 is a flowchart of one example of a procedure of an assembly order estimation process;
FIG. 15 is a flowchart of one example of a procedure of a remaining parts order estimation process;
FIG. 16 is a flowchart (part 1) of one example of a procedure of a removal candidate selection process;
FIG. 17 is a flowchart (part 2) of the example of the procedure of the removal candidate selection process;
FIG. 18 is a flowchart (part 1) of one example of a procedure of a process of identifying a part for removal;
FIG. 19 is a flowchart (part 2) of the example of the procedure of the process of identifying a part for removal; and
FIG. 20 is a flowchart of one example of a procedure of a fastening parts order estimation process.

### DESCRIPTION OF EMBODIMENTS

Embodiments will be described in detail with reference to the accompanying drawings.

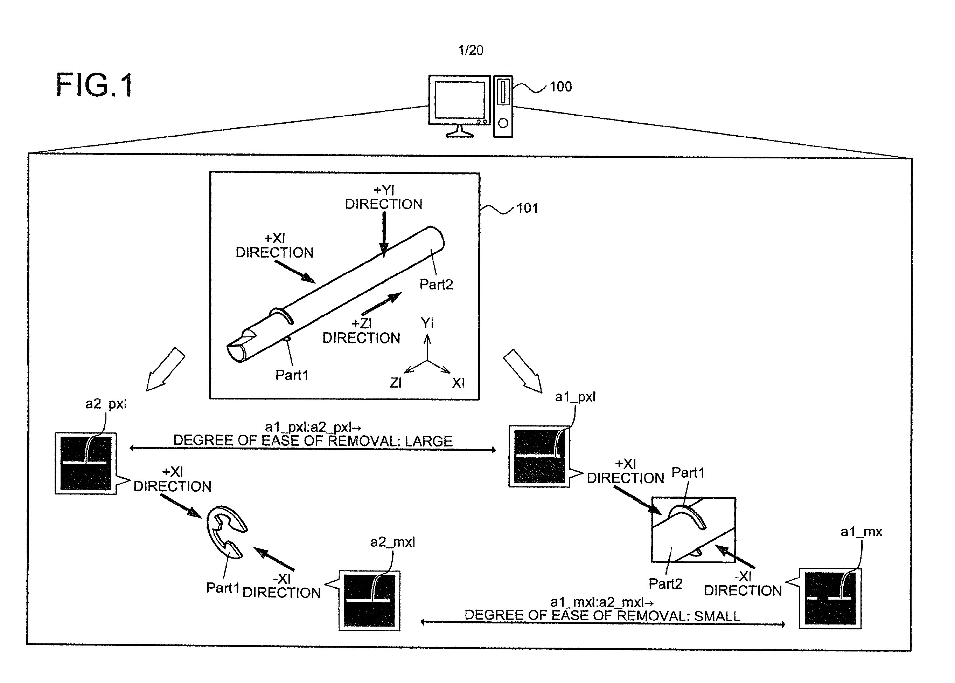

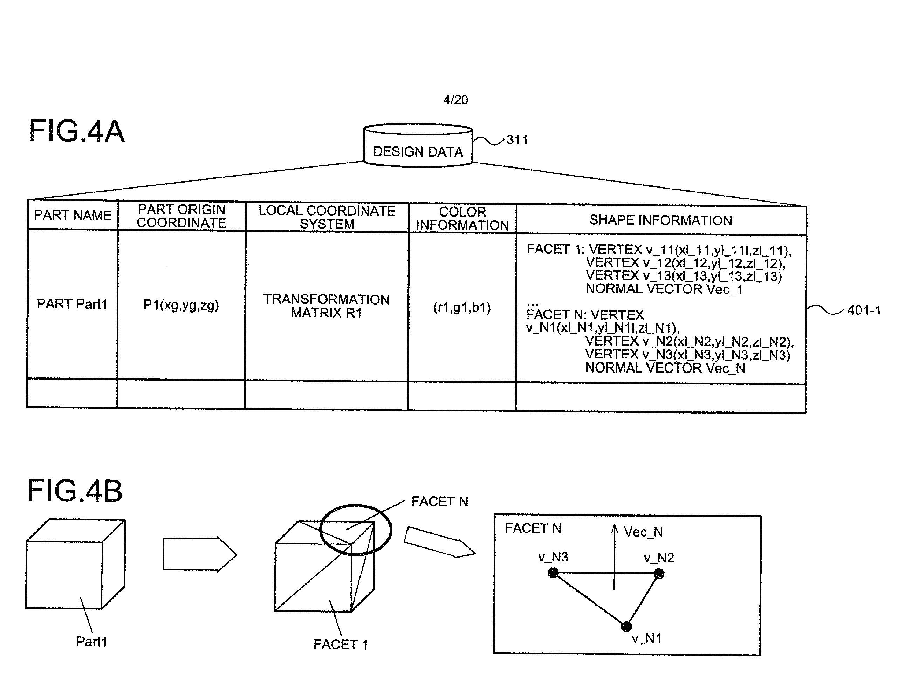

FIG. 1 is an explanatory diagram of an operation example of an estimating apparatus according to an embodiment. An estimating apparatus 100 according to the embodiment is a computer that, using design data concerning an assembly that includes a given part as a constituent element, estimates the ease of removing the part. When a product is assembled from plural parts, a worker or a machine for manufacturing assembles the product based on an order estimated by the estimating apparatus 100. The design data includes for each of the parts, positional information and information indicating the shape of the part. Details of the design data will be described later in FIGs. 4A and 4B. It is assumed that the assembly is made up of two or more parts. For example, machine products, etc., such as a personal computer (PC), a server, a portable information terminal, an automobile, and home appliances can be cited as the assembly.

With respect to a technology of estimating the assembly order, there are, for example, the following two technologies. A first technology estimates the assembly order, using assembly constraint information. The assembly constraint information indicates CAD constraint conditions that fix a positional relationship of geometric regions of two parts, the geometric regions being of the same type. Examples of geometric regions that are of the same type is axis and axis, plane and plane, etc. Since not all CAD data has assembly constraint information, the first technology has low versatility.

A second technology estimates the assembly order by judging whether a given part is separable from another part as well as determining interference with the other part, based on coupling relationship information indicating a coupling relationship between the parts. Interference determination processing is performed for each combination of faces, such as determination of whether a certain face of a given part interferes with the face of another part, whether the face of the other part interferes with the face of yet another part, and so on. Therefore, the amount of calculation increases. Since not all CAD data has the coupling relationship information, the second technology has low versatility. The second technology, which performs the interference determination, requires a large volume of calculation.

To achieve higher versatility and a lower calculation volume, the estimating apparatus 100 calculates the ease of removing a given part from the area of the given part as viewed from a certain direction and the area of the given part as viewed with other parts hidden. The estimating apparatus 100 estimates the order of removing parts according to the calculated degree of ease of removal and reverses the identified order of removing parts, thereby estimating the order of assembling parts. Since this requires the estimating apparatus 100 to perform only a comparison of two areas, the amount of calculation required for the estimation of the assembly order can be reduced.

In the example of FIG. 1, the estimating apparatus 100 estimates the degree of ease of removing a part Part1 included in an assembly 101. The assembly 101 includes the part Part1 and a part Part2. The information indicating the shape of each part included in the assembly 101 is expressed using a coordinate of a local coordinate system of X1, Y1, and Z1 axes.

The estimating apparatus 100, refers to the design data and calculates a first area of the part Part1 when the assembly 101 is viewed from a certain direction as well as calculating a second area of the part Part1 as viewed, with the visual field not blocked by other parts, from a certain direction. The certain direction may be any direction. In the example of FIG. 1, the estimating apparatus 100 estimates the ease of removing the part Part1 with respect to +X1 direction and -X1 direction selected as the certain direction.

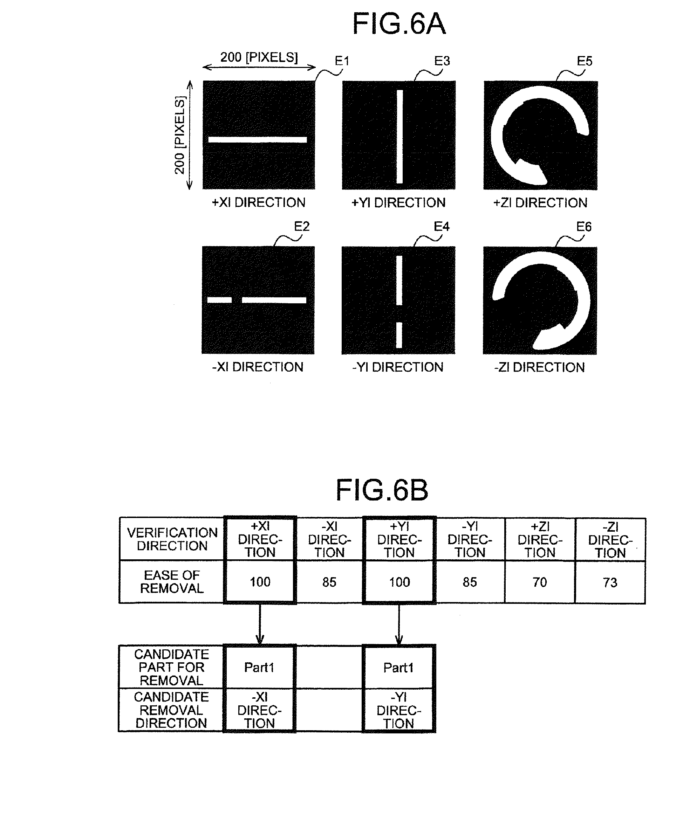

With respect to the +X1 direction, the estimating apparatus 100 calculates the first area of the part Part1 when the assembly 101 is viewed from the +X1 direction, as a1_px1. An example method of calculating the area will be described later in FIGs. 6A and 6B. The estimating apparatus 100 calculates the second area of the part Part1 as viewed, with the visual field not blocked by the part Part2, from the +X1 direction, as a2_px1. The estimating apparatus 100 then calculates the degree of ease of removal in the case of removing a given part from a certain direction, based on a ratio of the first area a1_px1 to the second area a2_px1. For example, the estimating apparatus 100 calculates a greater ease of removal as the first area becomes greater, with the second area used as a reference.

With respect to the -X1 direction, the estimating apparatus 100 calculates the first area of the part Part1 when the assembly 101 is viewed from the -X1 direction, as a1_mx1. The estimating apparatus 100 calculates the second area of the part Part1 as viewed, with the visual field not blocked by the part Part2, from the -X1 direction, as a2_mx1. The estimating apparatus 100 then calculates the degree of ease of removal in the case of removing a given part from a certain direction, based on a ratio of the first area a1_mx1 to the second area a2_mx1.

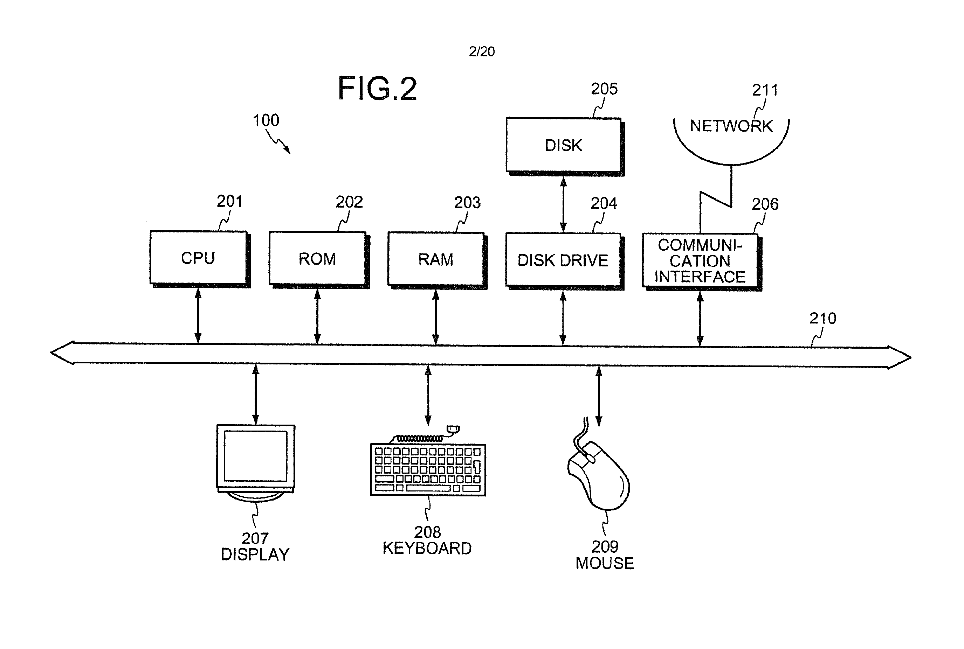

As a result of the calculation, the estimating apparatus 100 calculates a greater ease of removal as the second area becomes greater, with the first area used as a reference. In the example of FIG. 1, in comparison of a1_px1:a2_px1 and al_mx1:a2_mx1, a1_px1 on the basis of a2_px1 becomes greater than the a1_mx1 on the basis of a2_mx1. Therefore, the estimating apparatus 100 calculates a great degree of ease of removal of the part Part1 in the +X1 direction and calculates a small degree of ease of removal of the part Part1 in the -X1 direction. Details of the estimating apparatus 100 will now be described with reference to FIGs. 2 to 20.

FIG. 2 is a block diagram of a hardware configuration of the estimating apparatus. In FIG. 2, the estimating apparatus 100 includes a central processing unit (CPU)201, read-only memory (ROM) 202, random access memory (RAM) 203, a disk drive 204, a disk 205, a communication interface 206, a display 207, a keyboard 208, and a mouse 209, respectively connected by a bus 210.

The CPU 201 is a computing apparatus that governs overall control of the estimating apparatus 100. The ROM 202 is non-volatile memory that stores programs such as a boot program. The RAM 203 is volatile memory that is used as a work area of the CPU 201.

The disk drive 204 is a control apparatus that, under the control of the CPU 201, controls the reading and writing of data with respect to the disk 205. A magnetic disk drive, an optical disk drive, a solid state drive, and the like may be adopted as the disk drive 204. The disk 205 is non-volatile memory that stores data written thereto under the control of the disk drive 204. For example, if the disk drive 204 is a magnetic disk drive, a magnetic disk may be adopted as the disk 205. Further, if the disk drive 204 is an optical disk drive, an optical may be adopted as the disk 205. If the disk drive 204 is a solid state drive, semiconductor memory can be adopted as the disk 205.

The communication interface 206 is a control apparatus that administers an interface with the network 211 and control the input and output of data with respect to external devices. For example, the communication interface 206 is connected, via a communication line, to the network 211 such as local area network (LAN), a wide area network (WAN) and the internet, and through the network 211 is connected to other devices. A modem, LAN adapter, and the like may be adopted as the communication interface 206.

The display 207 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 207.

The keyboard 208 is a device that has, for example, keys for inputting letters, numerals, and various instructions and performs the input of data. Alternatively, a touch-panel-type input pad or numeric keypad, etc. may be adopted. The mouse 209 is used to move the cursor, select a region, or move and change the size of windows. A track ball or a joy stick may be adopted provided each respectively has a function similar to a pointing device.

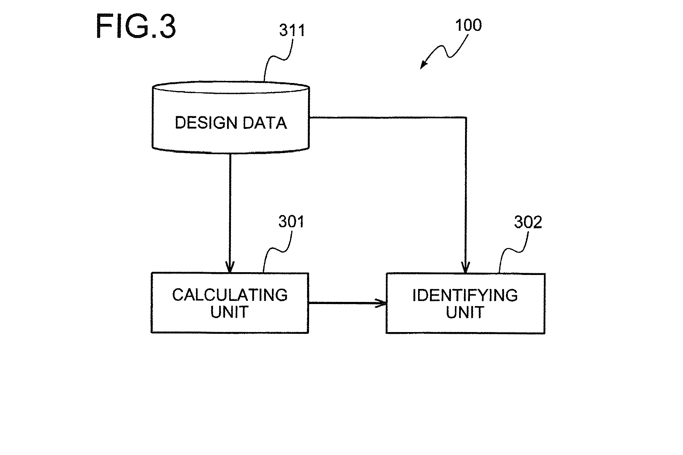

A functional configuration will be described of the estimating apparatus 100. FIG. 3 is a block diagram of a functional configuration example of the estimating apparatus. The estimating apparatus 100 includes a calculating unit 301 and an identifying unit 302. Functions of the calculating unit 301 and the identifying unit 302, serving as a control unit, are implemented by executing on the CPU 201, a program stored in a storage device. The storage device is, for example, the ROM 202, the RAM 203, the disk 205, etc., depicted in FIG. 2. The functions of the calculating unit 301 and the identifying unit 302 may be implemented by executing a program on another CPU by way of the communication interface 206.

The estimating apparatus 100 can access design data 311 concerning the assembly that includes plural parts. The design data 311 are stored in the storage device such as the RAM 203 and the disk 205. The design data 311 may include information indicating whether each part included in the assembly is a fastening part. A fastening part is a part that fastens plural parts. The fastening part is, for example, a screw, a nut, a washer, etc. The part fastened by the fastening part is referred to as a "fastened part".

The calculating unit 301 refers to the design data 311 and calculates the first area of a given part when the assembly is viewed from a certain direction and calculates the second area of the given part as viewed, with the visual field not blocked by other parts, from a certain direction. The calculating unit 301 calculates the degree of ease of removal in the case of removing the given part from a certain direction, based on the ratio of the first area to the second area. A certain direction may be any direction. The calculating unit 301 may calculate the degree of difficulty of removal.

Using the example of FIG. 1, for example, the calculating unit 301 calculates the first area a1_px1 of the part Part1 as viewed from the +X1 direction and the second area a2_px1 of the part Part1 as viewed, with the visual field not blocked by other parts, from the +X1 direction. The calculating unit 301 calculates the degree of ease of removal in the case of removing the part Part1 from the +X1 direction, based on the ratio of the first area a1_px1 to the second area a2_px1. For example, the calculating unit 301 may express the degree of ease of removal by results of the calculation of second area/first area.

When there is a part removable in plural directions, the calculating unit 301 may calculate the degree of ease of removal in such a manner that priority is given to the direction in which the last part was removed. For example, the calculating unit 301 calculates the degree of ease of removal so that, among the plural directions, the degree of ease of removal will become large in the same direction as the direction in which the last part was removed, and the degree of ease of removal will become small in directions different from the direction in which the last part was removed.

When there are plural removable parts, the calculating unit 301 may calculate the degree of ease of removal in such a manner that priority is given to the part that can be removed in the direction in which the last part was removed.

When there are plural removable parts, the calculating unit 301 may calculate the degree of ease of removal in such a manner that priority is given to a part having a short distance from the position of the part in the assembly to a position at which the part can be determined to have been removed from the assembly. For example, suppose two parts are removable. Then, the calculating unit 301 calculates the distance from the position of a first part to the position at which the first part can be determined to have been removed from the assembly and the distance from the position of a second part to the position at which the second part can be determined to have been removed from the assembly and calculates a large degree of ease of removal for the part whose value is smaller. A method to determine that a part has been removed from the assembly is, for example, to judge that a part has been removed when the center of gravity of the part has departed from a cuboid that covers the assembly and each side of which is parallel to any axis of X1, Y1, and Z1 axes. The cuboid, each side of which is parallel to any axis among the X1, Y1, and Z1 axes, is hereinafter referred to as a "bounding box".

When there are plural removable parts, the calculating unit 301 may calculate the degree of ease of removal in such a manner that priority is given to a part that is a closer distance to the position of the part removed most recently. For example, suppose two parts are removable. Then, the calculating unit 301 calculates the distance between the position of the part removed most recently and the position of a first part and the distance between the position of the part removed most recently and the position of a second part and calculates a greater degree of ease of removal for the part that is a closer distance to the position. Results of the calculation are stored in the memory area of the RAM 203, the disk 205, etc.

The calculating unit 301 refers to the design data 311 and calculates the ease of removal for plural parts and the identifying unit 302 identifies the part that is easiest to remove from results of the calculation made by the calculating unit 301. For example, if the degree of ease of removal of a first part is 100 and the degree of ease of removal of a second part is 80, the identifying unit 302 identifies the first part whose value is greater as the part that is easiest to remove. When the calculating unit 301 calculates the degree of difficulty of removal, the identifying unit 302 identifies the part that has the least difficulty of removal.

The identifying unit 302 may remove parts in the order of ease of removal and reverse the order in which the parts were removed, thereby identifying the order of assembly. For example, when, in the order of ease of removal, a part Part1, a part Part2, and a part Part3 are removed in that order, the identifying unit 302 identifies the reversed order of the part Part3, the part Part2, and the part Part1 as the assembly order.

The identifying unit 302 may remove a fastening part at the time of removing a part fastened by the fastening part from the assembly and reverse the order in which the parts were removed, thereby identifying the assembly order. For example, when the part Part2 is a part fastened by a fastening part, the identifying unit 302, which removes the fastening part at the time of removing the part Part2 from the assembly, removes the part Part1, the fastening part, the part Part2, and the part Part3 in that order. Results of the identification are stored in the memory area of the RAM 203, the disk 205, etc.

FIGs. 4A and 4B are explanatory diagrams of one example of the contents of the design data. FIG. 4A depicts the contents of the design data 311 and FIG. 4B depicts shape information included in the design data 311. The design data 311 includes positional information of a part and information indicating the shape of the part in a three-dimensional, global coordinate system, for each part. The design data 311 depicted in FIG. 4A includes record 401-1.

The design data 311 includes five fields respectively for the part name, the part origin coordinate, the local coordinate system, color information, and shape information. The part name field stores the name of a part. The part origin coordinate field stores positional information of the part in the global coordinate system. The local coordinate system field includes information indicating the direction of each axis of the local coordinate. In this embodiment, as for the information indicating the direction of each axis of the local coordinate, a transformation matrix is stored that, by being multiplied by the global coordinate, transforms the global coordinate into the local coordinate. The color information field includes color information of the part. The color information is, for example, the RGB value. The shape information field stores shape information indicating the shape of the part. As for the shape information, in this embodiment, plural facets are used to serve as the shape information. A facet is information to identify a minute plane. The facet will now be described with reference to FIG. 4B.

As depicted in FIG. 4B, the part Part1 is formed by facets 1 to N. One facet has coordinate information of three vertices and the normal vector of the minute plane formed by the three vertices. For example, facet N has three vertices including v_N1, v_N2, and v_N3 and the normal vector Vec_N.

For example, record 401-1 depicted in FIG. 4A indicates that the part Part1 has an origin coordinate of P1(xg, yg, zg), a transformation matrix of R1, color information of (r1, g1, b1), and facets 1 to N.

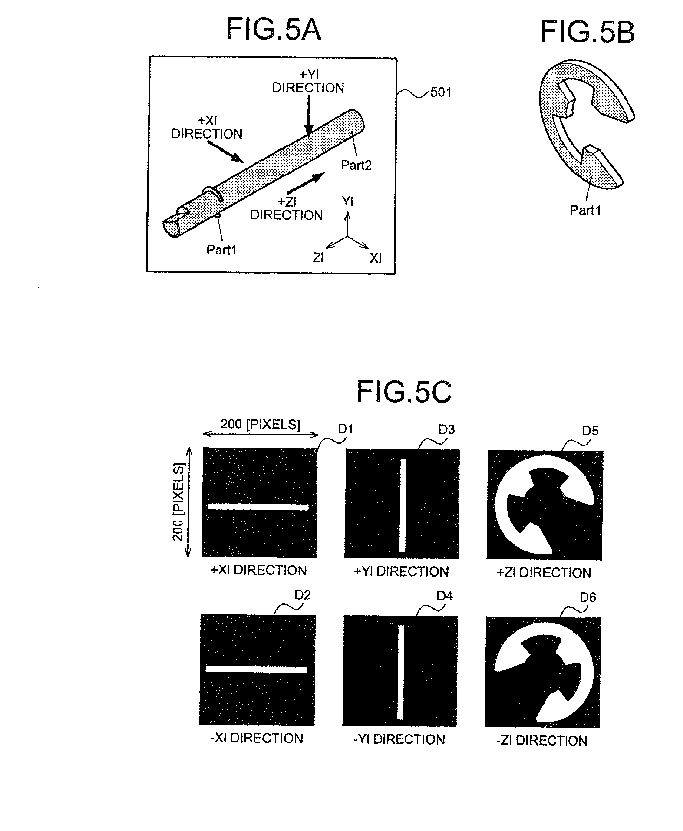

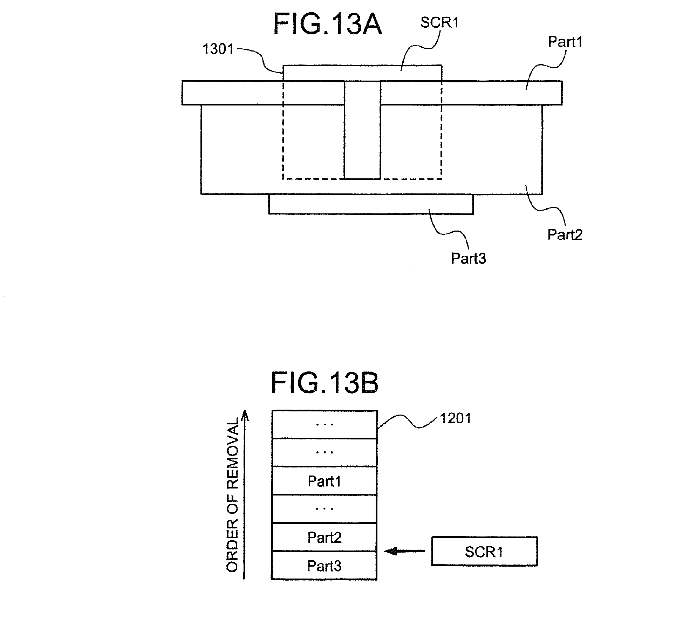

The estimation of the order of removing the parts from the assembly will be described with reference to FIGs. 5A, 5B, and 5C. For example, estimation of the order of removing the parts excluding the fastening parts, among the parts included in the assembly, will be described with reference to FIGs. 5A to 12 and estimation of the order of removing the fastening parts will be described with reference to FIGs. 13A and 13B. Among FIGs. 5A to 12, FIGs. 5A, 5B, 5C, 6A, and 6B will be used to describe with respect to each of the parts excluding the fastening parts, among the parts included in the assembly, processing for judging whether to select the part as a candidate part for removal.

FIGs. 5A, 5B, and 5C are explanatory diagrams (part 1) of an example of selection of a candidate part for removal. As depicted in FIG. 5A, an assembly 501 includes the part Part1 and the part Part2. The estimating apparatus 100 calculates the degree of ease of removal to be used for the selection of the candidate part for removal, with the part Part1 as the part to be processed. FIG. 5A is a bird's eye view of the part Part1.

As a preparation for the calculation of the degree of the ease of removal, the estimating apparatus 100 prepares a rendering area of a specific size and projects the part Part1 at a display magnification at which the part Part1 fits into the rendering area, as viewed from a verification direction. The estimating apparatus 100 projects the part Part1 in white and sets the background color as black and hiding the other part. The verification direction may be any direction but in this embodiment, is specified as six directions including +X1 direction, -X1 direction, +Y1 direction, -Y1 direction, +Z1 direction, and -Z1 direction. The specific size is specified by a developer.

Images projected onto the rendering area are depicted in FIG. 5C. FIG. 5C depicts image D1 of the part Part1 projected in the +X1 direction, image D2 projected in the -X1 direction, image D3 projected in the +Y1 direction, image D4 projected in the -Y1 direction, image D5 projected in the +Z1 direction, and image D6 projected in the -Z1 direction. It is assumed that images D1 to D6 are images of a specific size of 200 [pixels] vertically and 200 [pixels] horizontally. Images D1 to D6 are images of the part Part1 as viewed, with the visual field not blocked by the other part, from the verification direction by the worker.

After generation of the projected images D1 to D6, the estimating apparatus 100 calculates the area of the part Part1 by counting the number of white pixels within images D1 to D6. In the example depicted in FIG. 5C, the estimating apparatus 100 counts the number of white pixels as 2000 for images D1 to D4 and 13000 for images D5 and D6. Subsequent processing will be described with reference to FIGs. 6A and 6B.

FIGs. 6A and 6B are explanatory diagrams (part 2) of an example of selection of a candidate part for removal. The estimating apparatus 100 projects the part Part1 onto the rendering area from each verification direction, setting the color of the part Part1 as white, displaying the other part and setting the color of the other part as black, and setting the background color as black. Images projected onto the rendering area are depicted in FIGs. 6A. FIG. 6A depicts image E1 of the part Part1 projected in the +X1 direction, image E2 projected in the -X1 direction, image E3 projected in the +Y1 direction, image E4 projected in the -Y1 direction, image E5 projected in the +Z1 direction, and image E6 projected in the -Z1 direction. It is assumed that images E1 to E6 are images of a specific size of 200 [pixels] vertically and 200 [pixels] horizontally. Images E1 to E6 are images of the part Part1 as viewed from the verification direction by the worker.

After generation of the projected images E1 to E6, the estimating apparatus 100 calculates the area of the part Part1 by counting the number of white pixels within images E1 to E6. In the example of FIG. 6A, the estimating apparatus 100 counts the number of white pixels as 2000 for images E1 and E3, 1700 for images E2 and E4, 9000 for image E5, and 9500 for image E6.

The estimating apparatus 100 then calculates the ratio of the numbers of pixels of the white color of image D in the case of hiding the other part and image E in the case of displaying the other part, with respect to each verification direction. The estimating apparatus 100 calculates the degree of ease of removal of a given part, based on the ratio of the numbers of white pixels. The degree of ease of removal is hereinafter referred to simply as "ease of removal". For example, the estimating apparatus 100 calculates the ease of removal of the given part according to Eq. (1).

Ease of removal=number of white pixels in the case of displaying other part/number of white pixels in the case of hiding other part*100 (1)

For example, the estimating apparatus 100 calculates the ease of removal, using Eq. (1), with respect to the +X1 direction.

Ease of removal=2000/2000*100=100

Likewise, the estimating apparatus 100 calculates the ease of removal with respect to the -X1 direction to the -Z1 direction as well. Results of the calculation are depicted in FIG. 6B. The estimating apparatus 100 then judges whether to select the part as a candidate part for removal, based on the results of the calculation. For example, when there is a verification direction in which the ease of removal is greater than or equal to a threshold, the estimating apparatus 100 selects the part as a candidate part for removal. In FIG. 6B, for example, the threshold is set at 90 and since there are two verification directions, the +X1 direction and +Y1 direction, in which the ease of removal is greater than or equal to 90, the estimating apparatus 100 selects the part to be processed, the part Part1, as a candidate part for removal.

Further, the estimating apparatus 100 selects the direction opposite to the verification direction in which the threshold is reached as a candidate removal direction. The reason will be described why the direction opposite to the verification direction is taken. When the ease of removal reaches the threshold, since there are few parts that obstruct removal in the process, which starts at the worker, advances in the verification direction, and reaches the part, it is easy to move the part toward the worker. The direction of moving the part to be processed toward the worker is the direction opposite to the verification direction.

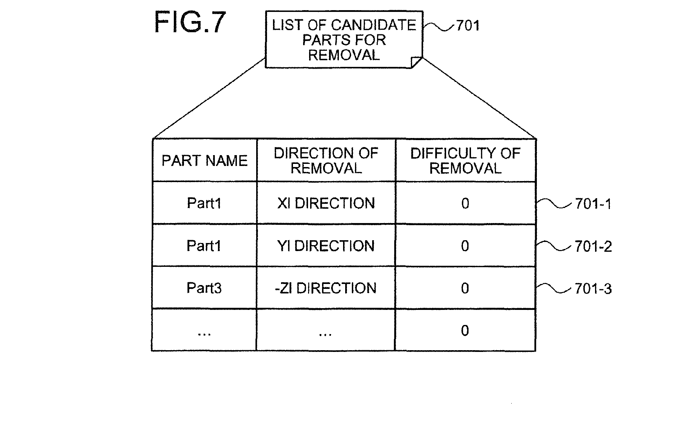

In the example depicted in FIG. 6B, since the verification direction in which the threshold is reached is +X1 direction and +Y1 direction, the estimating apparatus 100 stores the set of the part Part1 as the candidate part for removal and the -X1 direction and the set of the part Part1 as the candidate part for removal and the -Y1 direction. The estimating apparatus 100 executes the processing depicted in FIGs. 5A to 5C to select the candidate part for removal and the candidate removal direction, with respect to each of the parts excluding the fastening parts, among the parts included in the assembly 501. FIG. 7 describes an example of a list of candidate parts for removal as results of the selection.

FIG. 7 is an explanatory diagram of one example of a list of the candidate parts for removal. FIG. 7 depicts a list of candidate parts for removal 701. The list of candidate parts for removal 701 includes records 701-1 to 701-3. The list of candidate parts for removal 701 has three fields respectively for the part name, the removal direction, and difficulty of removal.

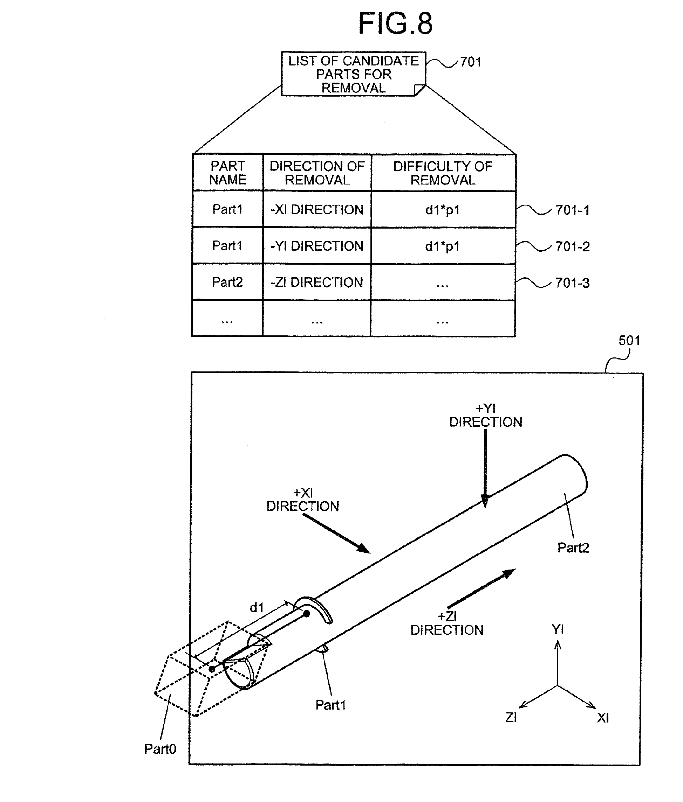

The part name field stores the name of the part as a candidate part for removal that has been selected in the processing depicted in FIGs. 6A and 6B. The removal direction field stores identification information of the direction as the candidate removal direction of the part to be removed that has been selected in the processing depicted in FIGs. 6A and 6B. The difficulty of removal field stores the degree of difficulty of removal in the case of removing the part in the removal direction. The value stored in the difficulty of removal field becomes greater as the part becomes more difficult to remove. Therefore, the estimating apparatus 100 preferentially identifies, as the part to be removed, the candidate part for removal that has a small value in the difficulty of removal field. At the stage depicted in FIG. 7, the value 0 is stored in each difficulty of removal field of records 701-1 to 701-3. Processing of updating the difficulty of removal field as a criterion of processing of identifying the part to be removed will be described with reference to FIGs. 8 to 11.

FIG. 8 is an explanatory diagram of a first criterion in the identification of the part to be removed. FIG. 8 describes the processing of updating the difficulty of removal field, based on the distance between a given part among the candidate parts for removal and the part removed most recently, as the first criterion in the identification of the part to be removed. It is assumed that the assembly 501 included the part Part0 removed most recently.

The estimating apparatus 100 calculates the distance between a given part as the candidate part for removal and the part removed most recently, multiplies the calculated distance by coefficient p1, and adds results of the multiplication to the value of the difficulty of removal field. For example, the estimating apparatus 100 calculates distance d1 between the part Part1 as the given part and the part Part0, based on the distance between the barycenter of the part Part1 and the barycenter of the part Part0. The barycenter of the part may be included in the design data or may be calculated from the shape information of the part. For example, the estimating apparatus 100 calculates the average value of coordinate positions of points included in the shape information of the part as the barycenter of the part.

In the example depicted in FIG. 8, the estimating apparatus 100 updates the difficulty of removal field of record 701-1 with d1*p1 as a result of the addition of d1*p1 to the value 0 stored in the difficulty of removal field of record 701-1. Likewise, the estimating apparatus 100 updates the difficulty of removal field of record 701-2 with d1*p1. When there is no parts have been removed, the estimating apparatus 100 does not perform the processing depicted in FIG. 8.

With the processing depicted in FIG. 8, the estimating apparatus 100 can preferentially identify the parts that constitute the efficient parts removal order since, as the distance from the part last removed decreases, the amount of movement of the worker's hands decreases and the removal of parts becomes more efficient. Also in the parts assembly order by reversing the parts removal order, since the amount of movement of the worker's hands decreases and the parts assembling work becomes more efficient, the estimating apparatus 100 can preferentially identify the parts that constitute an efficient assembly order.

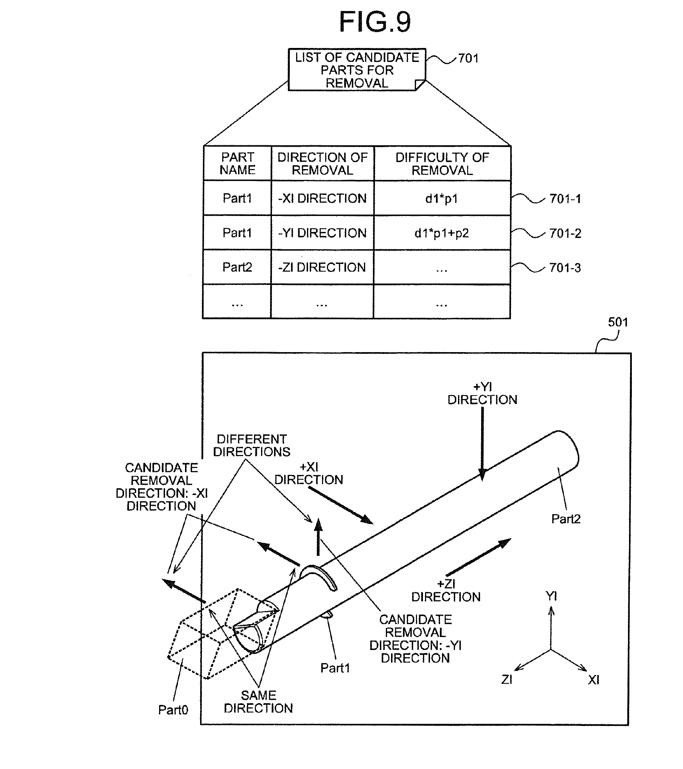

FIG. 9 is an explanatory diagram of a second criterion in the identification of the part to be removed.

FIG. 9 describes the processing of updating the difficulty of removal field, based on the candidate removal direction of a given part among the candidate parts for removal and the removal direction of the part last removed, as the second criterion in the identification of a part to be removed. In FIG. 9, it is assumed that the removal direction of the part Part0 removed last is the -X1 direction.

If the candidate removal direction of the given part and the removal direction of the part last removed differ, the estimating apparatus 100 adds constant p2 to the value stored in the difficulty of removal field of the list of candidate parts for removal 701. In the example of FIG. 9, with respect to record 701-1, since the candidate removal direction of the part Part1 and the removal direction of the part Part0 are the same -X1 direction, the estimating apparatus 100 does not update the difficulty of removal field. With respect to record 701-2, since the candidate removal direction of the part Part1 is the -Y1 direction and the removal direction of the part Part0 is the -X1 direction and these two directions are different, the estimating apparatus 100 updates the difficulty of removal field with d1*p1+p2 obtained by adding p2 to d1*p1. When no parts have been removed, the estimating apparatus 100 does not perform the processing depicted in FIG. 9.

With the processing depicted in FIG. 9, the estimating apparatus 100 can preferentially identify the parts that constitute an efficient parts removal order since the worker's movement becomes efficient in a case of removing the parts in the same direction, thereby making the parts removal work efficient. Also in the parts assembly order, by reversing the parts removal order, since the amount of movement of the worker decreases and the parts assembling work becomes efficient, the estimating apparatus 100 can preferentially identify the parts that constitute an efficient assembly order.

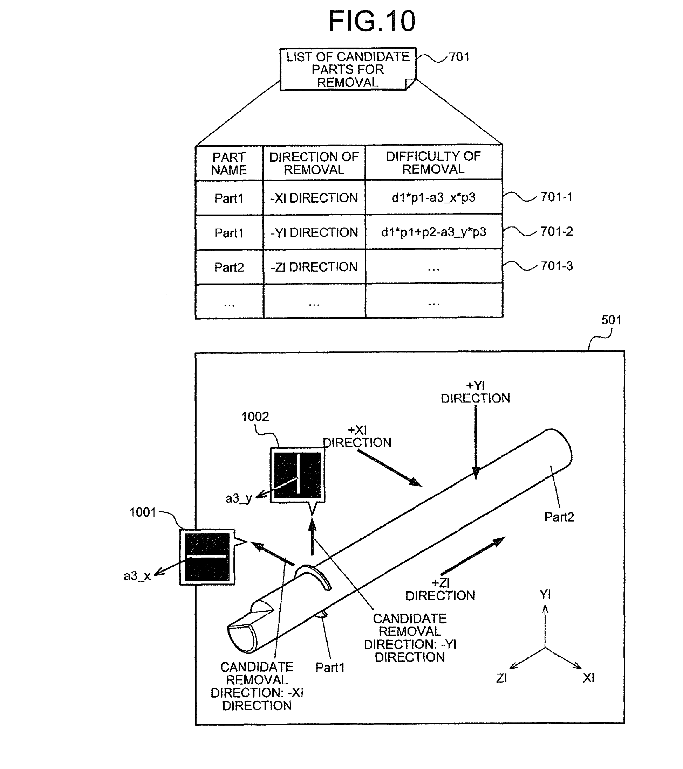

FIG. 10 is an explanatory diagram of a third criterion in the identification of a part to be removed. FIG. 10 describes the processing of updating the difficulty of removal field, based on the area of a given part among the candidate parts for removal as viewed from the candidate removal direction of the given part, as the third criterion in the identification of the part to be removed. FIG. 10 depicts image 1001 in the case of projecting the assembly 501 in the -X1 direction as the candidate removal direction and image 1002 in the case of projecting the assembly 501 in the -Y1 direction as the candidate removal direction, when the color of the part Part1 is set as white, the background color is set as black, and other part is hidden. In image 1001, the area of the part Part1 is assumed to be a3_x. In image 1002, the area of the part Part1 is assumed to be a3_y.

The estimating apparatus 100 calculates the area of the given part as viewed from the candidate removal direction, multiplies the calculated area by coefficient p3, and subtracts results of the multiplication from the value of the difficulty of removal field. For example, with respect to record 701-1, the estimating apparatus 100 subtracts a3_x*p3 as a result of the multiplication of the area a3_x of the part Part1 as viewed from the -X1 direction by p3 from the value stored in the difficulty of removal field. Likewise, with respect to record 701-2, the estimating apparatus 100 subtracts a3_y*p3 as a result of the multiplication of the area a3_y of the part Part1 as viewed from the -Y1 direction by p3 from the value stored in the difficulty of removal field.

With the processing depicted in FIG. 10, the estimating apparatus 100 can preferentially identify the parts that constitute an efficient parts removal order since, by removing the part having a large area, other parts become easy to remove and the parts removal work becomes efficient. Also in the parts assembly order, by reversing the parts removal order, the developer, by following the assembly order, will encounter fewer cases in which a small part becomes difficult to assemble consequent to assembling a part having a large area first and can perform the assembling work efficiently. Therefore, the estimating apparatus 100 can preferentially identify the parts that constitute an efficient assembly order.

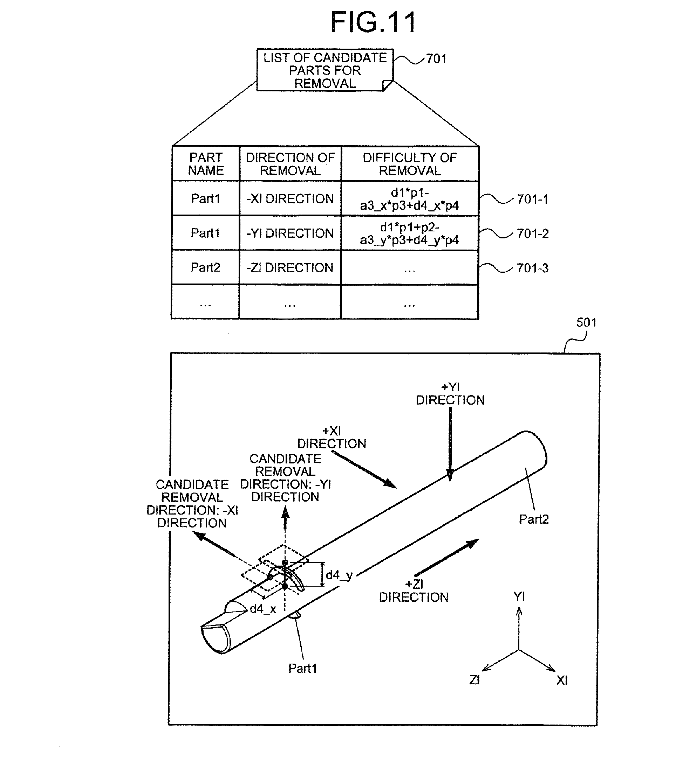

FIG. 11 is an explanatory diagram of a fourth criterion in the identification of the part to be removed. FIG. 11 describes the processing of updating the difficulty of removal field, based on the distance enabling a given part among the candidate parts for removal to be disengaged from the assembly 501 when the given part is moved in the candidate removal direction, as the fourth criterion in the identification of the part to be removed.

The estimating apparatus 100 calculates the distance from the position of the given part before movement, to the position at which the given part is disengaged from the assembly 501 in the case of moving the given part in the candidate removal direction, multiplies the calculated distance by coefficient p4, and adds results of the multiplication to the value of the difficulty of removal field. As to the judgment of whether the given part has been disengaged from the assembly, for example, the estimating apparatus 100 judges that the given part has been disengaged from the assembly when the barycenter of the given part is outside of the bounding box encompassing the assembly.

In the example depicted in FIG. 11, with respect to record 701-1, the estimating apparatus 100 calculates the distance d4_x by which the barycenter of the part Part1 becomes outside the bounding box encompassing the assembly 501 when the part Part1 is moved in the -X1 direction. The estimating apparatus 100 then updates the difficulty of removal field of record 701-1 with the value obtained by adding 4d_x*p4 to the value stored in the difficulty of removal field of record 701-1. Likewise, with respect to record 701-2, the estimating apparatus 100 calculates the distance d4_y by which the barycenter of the part Part1 becomes outside the bounding box encompassing the assembly 501 when the part Part1 is moved in the -Y1 direction. The estimating apparatus 100 then updates the difficulty of removal field of record 701-2 with the value obtained by adding 4d_y*p4 to the value stored in the difficulty of removal field of record 701-2.

With the processing depicted in FIG. 11, the estimating apparatus 100 can preferentially identify the parts that constitute an efficient parts removal order since, as the part removing distance decreases, the worker's removal work becomes easier and the removal work becomes more efficient. Also in the parts assembly order, by reversing the parts removal order, since the worker's assembling work becomes easier and the assembling work becomes efficient, the estimating apparatus 100 can preferentially identify the parts that constitute an efficient assembly order.

Specific values of p1 to p4 may be specified by the developer of the estimating apparatus 100 or may be set by the worker. For example, when the worker desires to reduce movement as much as possible, with p2 set to a value larger than those of p1, p3, and p4, the estimating apparatus 100 can estimate the assembly order giving priority to reducing the movement of the worker rather than the movement of the worker's hands.

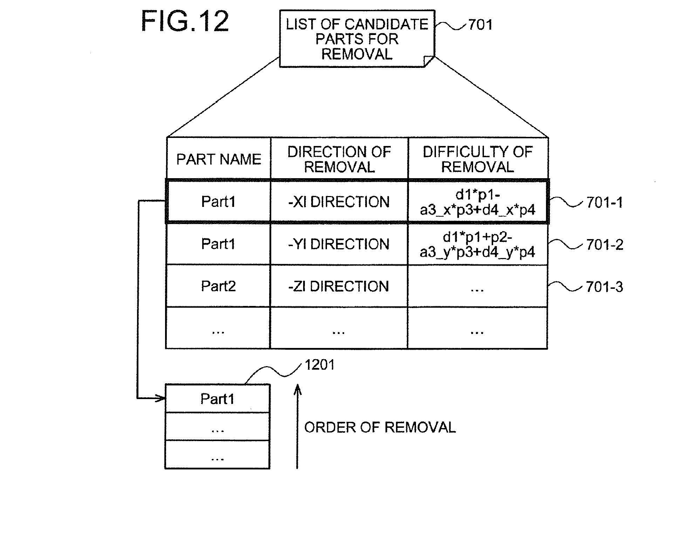

FIG. 12 is an explanatory diagram of one example of the identification of the part to be removed. The estimating apparatus 100 identifies the part to be removed and the removal direction, based on the values of the difficulty of removal field updated by the processing depicted in FIGs. 8 to 11. For example, the estimating apparatus 100 identifies as the part to be removed, the part for which the value of the difficulty of removal field is the smallest among the records and specifies the removal direction in the record as the removal direction of the identified part to be removed.

In the example of FIG. 12, the estimating apparatus 100 selects record 701-1 in which the value of the difficulty of removal field is the smallest, among records 701-1 to 701-3. The estimating apparatus 100 then identifies as the part to be removed, the part Part1 indicated by the value of the part name field of the selected record 701-1 and identifies the -X1 direction indicated by the value of the removal direction of the selected record 701-1 as the removal direction.

After the identification of the part to be removed, the estimating apparatus 100 deletes the identified part from the assembly 501, adds the identification information of the identified part at the head of a parts removal order list 1201, and repeats the processing of FIGs. 5A to 12. The parts removal order list 1201 is information indicating the order for removing the parts from the assembly 501. The parts removal order list 1201 depicted in FIG. 12 indicates the removal of the parts from the assembly 501 in an order starting with the part corresponding to the part identification information stored at the bottom of the list. The estimating apparatus 100 may store the identified removal direction associated with the identification information of the added part.

After deletion of all parts, the estimating apparatus 100 estimates the order of removing the fastening parts. Setting of the order of removing the fastening parts will be described with reference to FIGs. 13A and 13B.

FIGs. 13A and 13B are explanatory diagrams of an example of estimating the removal order of the fastening parts. FIGs. 13A and 13B describes the example of estimating the removal order of the fastening parts. The estimating apparatus 100 identifies the fastened part to be fastened by the fastening part. An operation of the identification will be described with reference to FIG. 13A. FIG. 13A depicts SCR1 as the fastening part and the parts Part1 to Part3.

For example, the estimating apparatus 100 identifies the part included in the bounding box encompassing the fastening part as the fastened part. Taking the example depicted in FIG. 13A, the estimating apparatus 100 identifies the part included in a bounding box 1301 encompassing the part SCR1 as the fastened part. In the example depicted in FIGs. 13A and 13B, the estimating apparatus 100 searches for the part Part1 and the part Part2 included in the bounding box 1301 as the fastened part. Since the part Part3 is not included in the bounding box 1301, the estimating apparatus 100 does not identify the part Part3 as the fastened part.

The estimating apparatus 100 then sets the removal order of the fastening part immediately before the fastened part to be removed first among the identified fastened parts. The order of removal of the fastening part will be described with reference to FIG. 13B. FIG. 13B displays the parts removal order list 1201. The parts removal order list 1201 indicates removal of the part Part3 first, removal of the part Part2 second, and removal of other parts followed by the removal of the part Part1.

For example, the estimating apparatus 100 sets the removal order of the part SCR1 to be immediately before the part Part2 and to be removed first among the identified fastened parts Part1 and Part2. The estimating apparatus 100 repeats the processing described in FIGs. 13A and 13B for each fastening part. After finishing of the processing described in FIGs. 13A and 13B for all fastening parts, the estimating apparatus 100 reverses the parts removal order list 1201 as results of the estimation and outputs it as the parts assembly order.

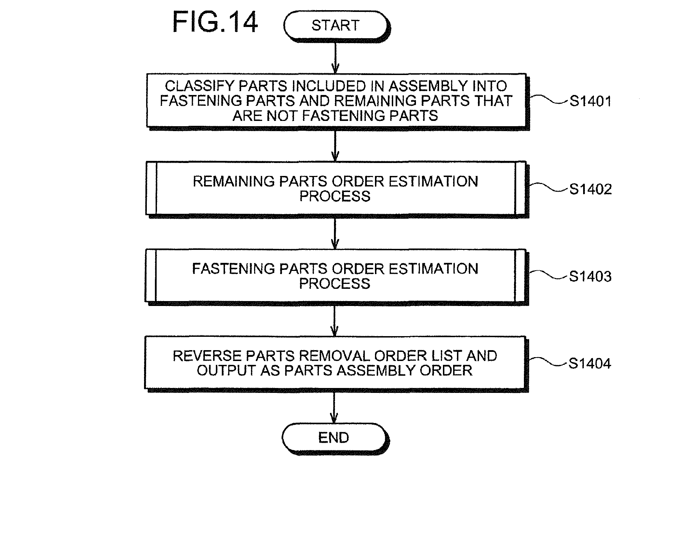

Flowchart of the processing depicted in FIGs. 5A to 13B will be described with reference to FIGs. 14 to 18.

FIG. 14 is a flowchart of one example of a procedure of an assembly order estimation process. The assembly order estimation process is a process of estimating an assembly order for the assembly. The estimating apparatus 100 classifies the parts included in the assembly into fastening parts and remaining parts that are not fastening parts (step S1401). For example, since the developer assigns designations of the parts according to rules of nomenclature, the estimating apparatus 100 classifies the parts into fastening parts and remaining parts that are not the fastening parts according to the rules of nomenclature. For example, when the designation of a given part starts with "SCR", the estimating apparatus 100 classifies the part as a fastening part and when the designation of the part does not start with "SCR", the estimating apparatus 100 classifies the part as a remaining part.

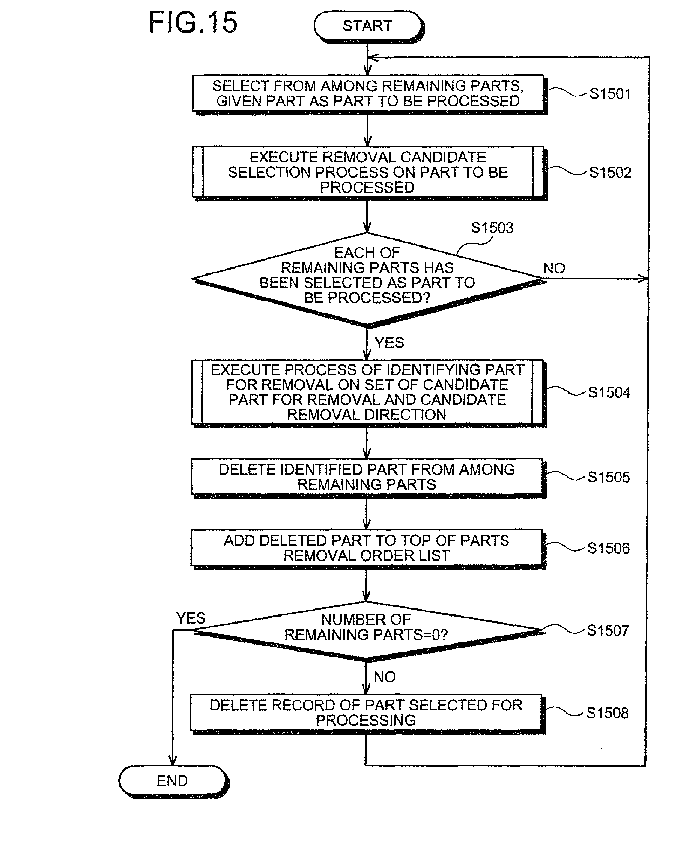

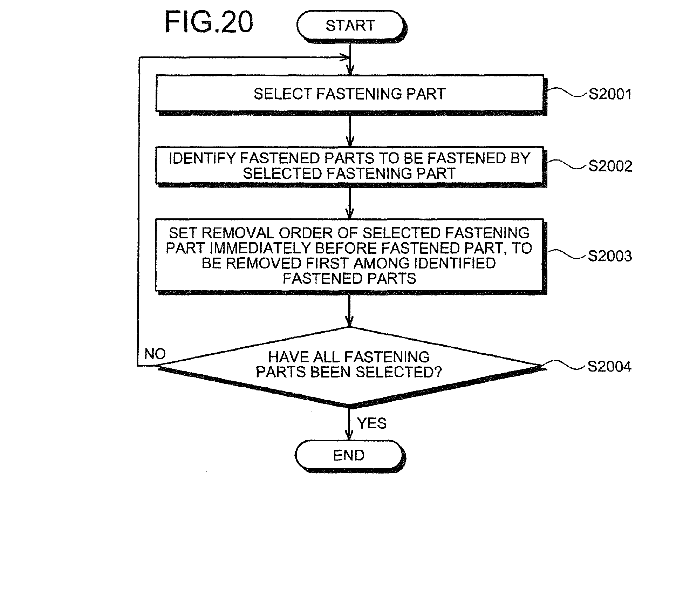

The estimating apparatus 100 executes a remaining parts order estimation process (step S1402). Details of the remaining parts order estimation process will be described later in FIG. 15. The estimating apparatus 100 executes a fastening parts order estimation process (step S1403). Details of the fastening parts order estimation process will be described later in FIG. 20. The estimating apparatus 100 reverses the parts removal order list and outputs it as the parts assembly order (step S1404). After execution of the operation at step S1404, the estimating apparatus 100 finishes the assembly order estimation process. With the execution of the assembly order estimation process, the estimating apparatus 100 can notify an assembler of an efficient parts assembly order. The worker manufactures the assembly according to the assembly order identified by the estimating apparatus 100.

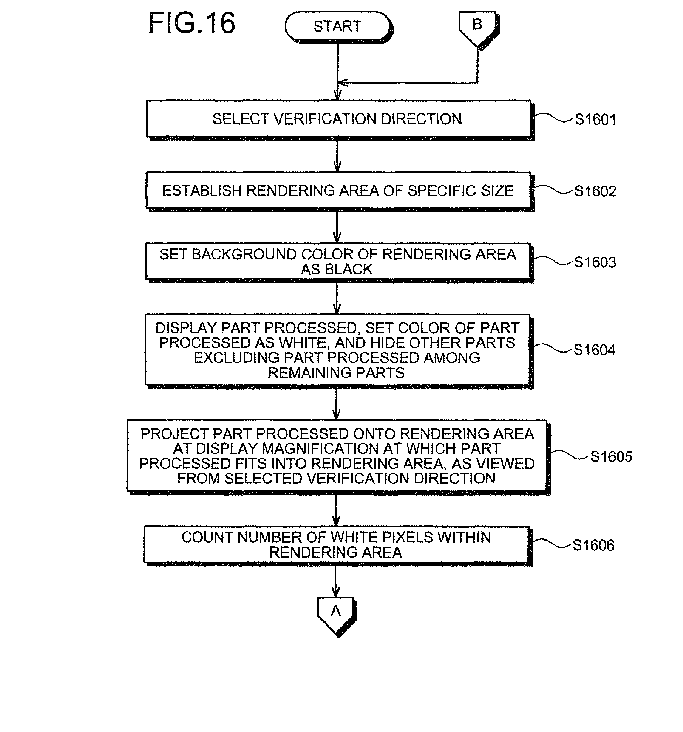

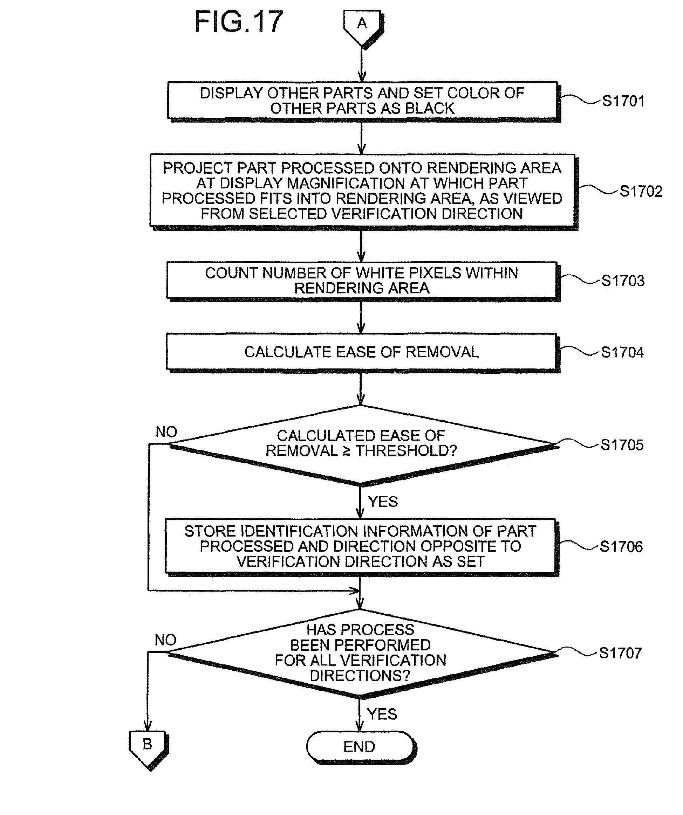

FIG. 15 is a flowchart of one example of a procedure of the remaining parts order estimation process. The remaining parts order estimation process is the processing of estimating the assembly order of the parts classified as other than the fastening parts. The estimating apparatus 100 selects, from among the remaining parts, a given part as a part to be processed (step S1501). The estimating apparatus 100 then executes a removal candidate selection process on the part to be processed (step S1502). Details of the removal candidate selection process will be described later in FIGs. 16 and 17. The estimating apparatus 100 judges whether each of the remaining parts has been selected as a part to be processed (step S1503). If a part not yet selected remains (step S1503: NO), the estimating apparatus 100 transitions to the operation at step S1501. After the transition, as the operation at step S1501, the estimating apparatus 100 selects, from among the remaining parts that have not yet been selected, part to be processed.

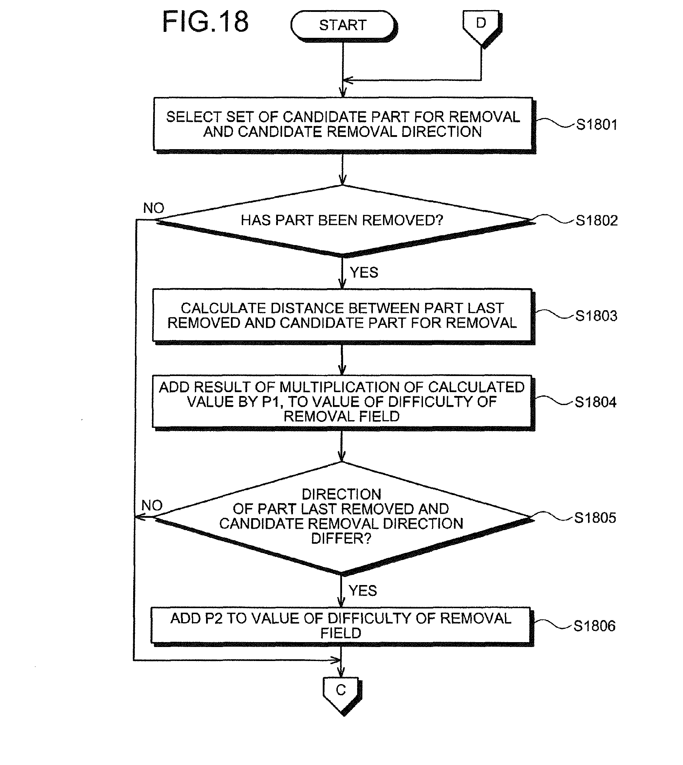

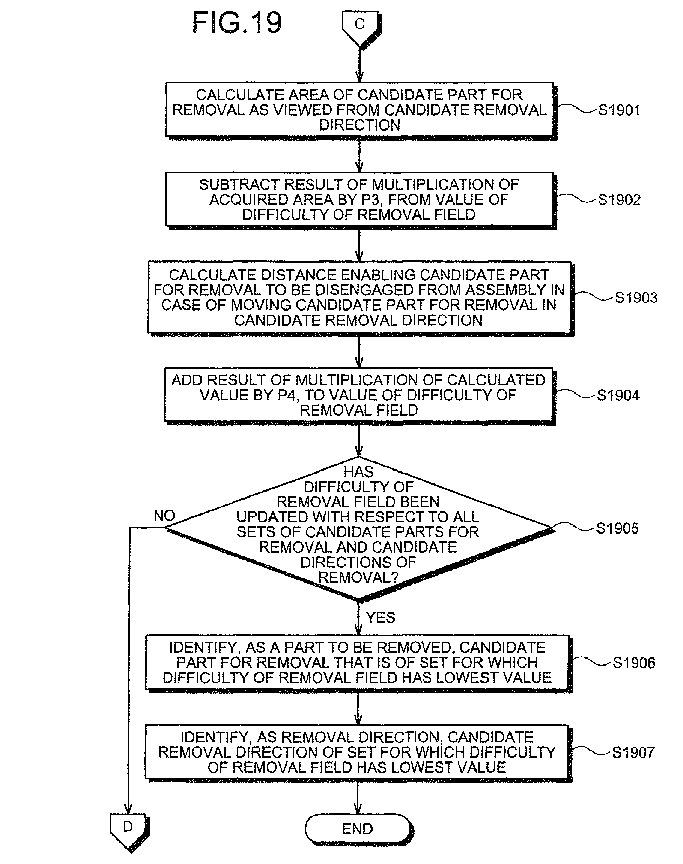

If all the parts have been selected as a part to be processed (step S1503: YES), the estimating apparatus 100 executes process of identifying a part for removal with respect to a set of a candidate part for removal and a candidate removal direction (step 51504). Details of the process of identifying a part for removal will be described later in FIGs. 18 and 19. The estimating apparatus 100 deletes the identified part from among the remaining parts (step S1505). The estimating apparatus 100 adds the deleted part to the top of the parts removal order list (step S1506). The estimating apparatus 100 judges if the number of the remaining parts is 0 (step S1507).

If the number of the remaining parts is not 0 (step S1507: NO), the estimating apparatus 100 deletes the record of the part selected for processing (step S1508). After the execution of step S1508, the estimating apparatus 100 transitions to the operation at step S1501. After the transition and as the operation at step S1501, since the record of the selected the part to be processed has been deleted, the estimating apparatus 100 selects from among the remaining parts, a given part to be processed.

If the number of the remaining parts is 0 (step S1507: YES), the estimating apparatus 100 ends the remaining parts order estimation process. The estimating apparatus 100, by executing the remaining parts order estimation process, can notify the worker who assembles the assembly of the efficient assembly order of the remaining parts excluding the fastening parts.

FIG. 16 is a flowchart (part 1) of one example of a procedure of the removal candidate selection process. FIG. 17 is a flowchart (part 2) of the example of the procedure of the removal candidate selection process. The removal candidate selection process is a process of selecting a candidate part for removal.

The estimating apparatus 100 selects a verification direction (step S1601). At step S1601, if there are plural verification directions, the estimating apparatus 100 selects a verification direction from among the verification directions. The estimating apparatus 100 establishes a rendering area of a specific size (step S1602). The estimating apparatus 100 sets the background color of the rendering area as black (step S1603). The estimating apparatus 100 displays the part processed and sets the color of the part processed as white as well as hiding other parts excluding the part processed among the remaining parts (step S1604). The estimating apparatus 100 projects the part processed onto the rendering area at a display magnification at which the part processed fits into the rendering area, as viewed from the selected verification direction (step S1605). The estimating apparatus 100 counts the number of white pixels within the rendering area (step S1606). After finishing of execution of step S1606, the estimating apparatus 100 transitions to of the operation at step S1701 depicted in FIG. 17.

After the execution of step S1606, the estimating apparatus 100 displays the other parts and sets the color of the other parts as black (step S1701). The estimating apparatus 100 projects the part to be processed onto the rendering area at a display magnification at which the part to be processed fits into the rendering area, as viewed from the selected verification direction (step S1702). The estimating apparatus 100 counts the number of white pixels within the rendering area (step S1703). The estimating apparatus 100 calculates the ease of removal (step S1704). For example, the estimating apparatus 100 calculates the number of pixels obtained by the operation at step S1703/the number of pixels obtained by the operation at step S1606*100 as the ease of removal.

The estimating apparatus 100 judges if the calculated ease of removal is greater than or equal to the threshold (step S1705). If the calculated ease of removal is greater than or equal to the threshold (step S1705: YES), the estimating apparatus 100 stores the identification information of the part processed and the direction opposite to the verification direction as a set (step S1706). After the execution of step S1706 or if the ease of removal is not greater than or equal to the threshold (step 1705: NO), the estimating apparatus 100 judges if the process has been performed with respect to all verification directions (step S1707). The "process" at step S1707 indicates the operations at steps S1601 to S1706. If there is a verification direction for which the process has not been performed (step S1707: NO), the estimating apparatus 100 transitions to the operation at step S1601. After the transition, as the operation at step S1601, the estimating apparatus 100 selects a verification direction from among the verification directions not yet selected.

If the process has been performed with respect to all the verification directions (step S1707: YES), the estimating apparatus 100 ends the removal candidate selection process. With the execution of the removal candidate selection process, the estimating apparatus 100 can search for parts that are easy to remove from the assembly.

FIG. 18 is a flowchart (part 1) of one example of a procedure of the process of identifying a part for removal. FIG. 19 is a flowchart (part 2) of the example of the procedure of the process of identifying a part for removal. The estimating apparatus 100 selects a set of the candidate part for removal and the candidate removal direction (step S1801).

The estimating apparatus 100 judges if any parts have been removed (step S1802). If no parts have been removed indicates that the process of identifying a part for removal is being executed for the first time. If a part has been removed (step S1802: YES), the estimating apparatus 100 calculates the distance between the part last removed and the candidate part for removal (step S1803). The estimating apparatus 100 adds a result of multiplication of the calculated value by p1, to the value of the difficulty of removal field (step S1804).

The estimating apparatus 100 judges if the direction of the part last removed and the candidate removal direction differ (step S1805). If the direction of the part last removed and the candidate removal direction differ (step S1805: YES), the estimating apparatus 100 adds p2 to the value of the difficulty of removal field (step S1806).

After the execution of step S1806, or if no part has been removed (step S1802: NO), or if the direction of the part last removed and the candidate removal direction are the same (step S1805: NO), the estimating apparatus 100 transitions to the operation at step S1901.

After the execution of step S1806, or in the case of step S1802: NO, or in the case of step S1805: NO, the estimating apparatus 100 calculates the area of the candidate part for removal as viewed from the candidate removal direction (step S1901). The estimating apparatus 100 subtracts a result of multiplication of the acquired area by p3, from the value of the difficulty of removal field (step S1902). The estimating apparatus 100 calculates the distance enabling the candidate part for removal to be disengaged from the assembly in the case of moving the candidate part for removal in the candidate removal direction (step S1903). The estimating apparatus 100 adds a result of multiplication of the calculated value by p4, to the value of the difficulty of removal field (step S1904).

The estimating apparatus 100 judges whether the difficulty of removal field has been updated with respect to all sets of the candidate parts for removal and the candidate directions of removal (step S1905). If the difficulty of removal field has not been updated with respect to all sets (step S1905: NO), the estimating apparatus 100 transitions to the operation at step S1801. After the transition, as the operation at step S1801, the estimating apparatus 100 selects a set not yet selected.

If the difficulty of removal field has been updated with respect to all sets (step S1905: YES), the estimating apparatus 100 identifies, as a part to be removed, the candidate part for removal that is of the set for which the difficulty of removal field has the lowest value (step S1906). The estimating apparatus 100 identifies, as the removal direction, the candidate removal direction of the set for which the difficulty of removal field has the lowest value (step S1907). After the execution of step S1907, the estimating apparatus 100 ends the process of identifying a part for removal. With the execution of the process of identifying a part for removal, the estimating apparatus 100 can identify a part for removal that can be removed efficiently when there are plural sets of candidate parts for removal and candidate directions of removal.

FIG. 20 is a flowchart of one example of a procedure of the fastening parts order estimation process. The fastening parts order estimation process is a process of estimating the assembly order of the fastening parts. The estimating apparatus 100 selects a fastening part (step S2001). The estimating apparatus 100 identifies the fastened parts to be fastened by the selected fastening part (step S2002). The estimating apparatus 100 sets the removal order of the selected fastening part immediately before the fastened part, to be removed first among the identified fastened parts (step S2003).

The estimating apparatus 100 judges whether all fastening parts have been selected (step S2004). If a fastening part has not yet been selected (step S2004: NO), the estimating apparatus 100 transitions to the operation at step S2001. After the transition, the estimating apparatus 100 selects a fastening part from among the fastening parts not yet selected. If all fastening parts have been selected (step S2004: YES), the estimating apparatus 100 ends the fastening parts order estimation process. With the execution of the fastening parts order estimation process, the estimating apparatus 100 can notify the worker who assembles the assembly of an efficient parts assembly order for the fastening parts, with respect to the remaining parts excluding the fastening parts.

As described above, according to the estimating apparatus 100, the ease of removal of a given part is calculated from the area of the given part as viewed from a certain direction and the area of the given part as viewed with other parts hidden. This enables the estimating apparatus 100 to estimate an assembly order by merely comparing two areas and to achieve a reduction in the amount of calculation.

According to the estimating apparatus 100, since the assembly order is estimated using parts shape information that is included in any CAD data rather than using information, such as assembly constraint information and coupling relationship information, which may not be included in the CAD data, the versatility can be increased. The estimating apparatus 100, which can bring the preparation of the assembly order forward, can feed back problems at an early stage. The estimating apparatus 100 can prepare an assembly order even if the user of the estimating apparatus 100 has little experience with the assembly order.

According to the estimating apparatus 100, configuration may be such that the ease of removal is calculated of plural parts and that the easiest-to-remove part will be identified from results of the calculation. This enables the estimating apparatus 100 to notify the worker of the information of the easiest-to-remove part. The worker can perform efficient assembly by making arrangements so that the easiest-to-remove part notified by the estimating apparatus 100 is assembled lastly.

According to the estimating apparatus 100, configuration may be such that the parts will be removed in the order of ease of removal and that the order in which the parts were removed will be reversed to identify an assembly order. With this, the estimating apparatus 100, by reversing the order of ease of removal, can notify the worker of an assembly order enabling easy assembly.

According to the estimating apparatus 100, configuration may be such that a fastening part is removed at the time of removing the parts fastened by the fastening part and that the order in which the parts were removed will be reversed to identify an assembly order. This enables the estimating apparatus 100 to notify the worker of an efficient parts assembly order for the fastening parts.

According to the estimating apparatus 100, if there is the part that can be removed in plural directions, priority may be given to the direction in which the part removed immediately before was removed. This enables the estimating apparatus 100 to notify the worker of an efficient assembly order aimed at reducing the movement of the worker.

According to the estimating apparatus 100, if there are plural parts that can be removed, priority may be given to the part that can be removed in the direction in which the part removed immediately before was removed. This enables the estimating apparatus 100 to notify the worker of an efficient assembly order aimed at reducing the movement of the worker.

According to the estimating apparatus 100, if there are plural parts that can be removed, priority may be given to a part having a short distance from the position of the part in the assembly to the position at which the part is determined to be removed from the assembly. This enables the estimating apparatus 100 to notify the worker of an efficient assembly order aimed at reducing the movement of the worker's hands.

According to the estimating apparatus 100, if there are plural parts that can be removed, priority may be given to a part that is a closer distance to the position of the part removed immediately before. This enables the estimating apparatus 100 to notify the worker of an efficient assembly order aimed at reducing the movement of the worker's hands.

The estimating method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A computer-readable recording medium storing a degree of ease of parts removal estimating program for estimating the degree of ease of parts removal, using design data concerning an assembly that includes a given part as a constituent element, the degree of ease of parts removal estimating program causing a computer to execute a process comprising:
referring to the design data; and
calculating the degree of ease of removal in a case of removing the given part from a given direction, based on a ratio of an area of the part when the assembly is seen from the given direction to an area of the part as seen from the given direction, without a visual field being blocked by other parts.

2. The computer-readable recording medium according to claim 1, wherein
the calculating includes calculating the degree of ease of the removal with respect to plural parts and from calculation results, and
the process comprising identifying a part that is easiest to remove.

3. The computer-readable recording medium according to claim 2, the process comprising:
removing the parts according to ease of removal; and
identifying an assembly order by reversing an order in which the parts are removed.

4. The computer-readable recording medium according to claim 1, wherein
information that indicates whether parts included in the design data are fastening parts is included, and
the process comprises removing a fastening part at the time of removing parts fastened by the fastening part.

5. The computer-readable recording medium according to claim 1, wherein
when a part that can be removed in plural directions is present, priority is given to the direction in which the part last removed was removed.

6. The computer-readable recording medium according to claim 1, wherein
when plural parts that can be removed are present, priority is given to a part that can be removed in the direction in which the part last removed was removed.

7. The computer-readable recording medium according to claim 1, wherein
when plural parts that can be removed are present, priority is given to a part having a short distance from the position of the part in the assembly to the position at which the part is determined to have been removed from the assembly.

8. The computer-readable recording medium according to claim 1, wherein
when plural parts that can be removed are present, priority is given to a part that is a short distance from the part last removed.

9. An estimating apparatus that performs calculations, the estimating apparatus comprising
a calculating unit (301) that refers to design data concerning an assembly that includes a given part as a constituent element, and calculates a degree of ease of removal in a case of removing the given part from a given direction, based on a ratio of an area of the given part when the assembly is seen from the given direction to an area of the given part as seen from the given direction, without blocking a visual field by other parts.

10. An estimating apparatus comprising
a processor configured to:
refer to design data concerning an assembly that includes a given part as a constituent element, and
calculate a degree of ease of removal in a case of removing the given part from a given direction, based on a ratio of an area of the given part when the assembly is seen from the given direction to an area of the given part as seen from the given direction, without blocking of a visual field by other parts.

11. A manufacturing method that uses a degree of ease of parts removal that uses design data concerning an assembly that includes a given part as a constituent element, the manufacturing method **characterized by**:
referring to the design data;
calculating the degree of ease of removal in a case of removing the given part from a given direction, based on a ratio of an area of the part when the assembly is seen from the given direction to an area of the part as seen from the given direction, without a visual field being blocked by other parts;
identifying an assembly order based on the calculated degree of ease of removal; and
manufacturing the assembly according to the identified assembly order.
